# EUROPEAN PATENT APPLICATION

(11) **EP 2 464 077 A1**
(43) Date of publication of application: **13.06.2012**
(21) Application number: 10788795.2
(22) Date of filing: 20.05.2010
(51) Int. Cl.: H04L 29/02, H04B 7/24

(54) **METHOD, SYSTEM AND MULTI-FREQUENCY LABEL FOR DYNAMICALLY ADJUSTING RADIO FREQUENCY PARAMETERS OF MULTI-FREQUENCY LABEL**

(30) Priority: 15.10.2009 CN 200910180816
(71) Applicant: ZTE Corporation, Shenzhen, Guangdong 518057 (CN)
(72) Inventor: LI, Yanbo, Shenzhen Guangdong 518057 (CN); TAN, Yonglong, Shenzhen Guangdong 518057 (CN)
(74) Representative: Manitz, Finsterwald & Partner GbR
(86) International application number: PCT/CN2010/073010
(87) International publication number: WO 2010/145399

(57) **Abstract**

Disclosed are a method, system and multi-frequency label for dynamically adjusting radio frequency parameters of multi-frequency label. The system includes: a multi-frequency label and an interaction object. The multi-frequency label includes: a carrier detection module, a main control module and N communication modules, wherein N is an integer larger than or equal to 2, and each communication module works on different frequency bands. The method, which is applied between the multi-frequency label and the interaction object, includes that: the interaction object transmits a negotiation request on the predetermined frequency band, the request at least carries identification information and radio frequency parameters information of the frequency band to be negotiated; the multi-frequency label receives the negotiation request on the predetermined frequency band, and adjusts the radio frequency parameters of the frequency band to be negotiated according to the content carried by the negotiation request. By the present invention, the radio frequency state can be adjusted according to the application scene, hence the function that the power consumption is reduced as much as possible is realized. Moreover, by the present invention, the multi-frequency label is enabled to adapt different interaction objects, the requirements of different service function is met.

## Description

### Technical Field

The present invention relates to the communication field, and especially to a multi-frequency tag and a method, system for dynamically adjusting radio frequency parameters of a multi-frequency tag.

### Background Art

In the multi-frequency tag application, a complete radio frequency system includes: terminal devices (such as radio frequency tag, etc.) which can work over several frequency bands and service end devices (such as radio frequency base station, etc.) which can work over several frequency bands.

When the tag needs to communicate with a plurality of interaction objects, in order to adapt to different interaction objects, it is usually necessary for the multi-frequency tag to be able to dynamically modify the radio frequency parameters. A commonly-used implementation is to independently negotiate the radio frequency parameters over each frequency band, i.e. the multi-frequency tag firstly works in a specific state, and then, after interacting with the service end device for several times, it works by using the negotiated radio frequency parameters to configure the radio frequency module.

Such a manner often brings additional power consumption problem: in order to ensure accurate synchronization, it is necessary for each of the communication frequency bands of the multi-frequency tag to maintain in the receiving state. This is unacceptable for those radio frequency tags which have rather high requirements on power consumption, especially for active radio frequency tags.

### Summary of the Invention

The technical problem to be solved by the present invention is to provide a multi-frequency tag and a method, system for dynamically adjusting radio frequency parameters of a multi-frequency tag, so as to solve the problem that the power consumption of the multi-frequency tag is overlarge.

In order to solve the above problem, the present invention provides a method for dynamically adjusting radio frequency parameters of a multi-frequency tag, applied between a multi-frequency tag and an interaction object, comprising:
the interaction object sending a negotiation request over a predetermined frequency band, and the request at least carrying identification information about a to-be-negotiated frequency band and radio frequency parameter information about the to-be-negotiated frequency band; and the multi-frequency tag receiving the negotiation request over the predetermined frequency band and adjusting the radio frequency parameters of the to-be-negotiated frequency band according to the content carried in the negotiation request.
In the step of the interaction object sending a negotiation request over a predetermined frequency band, and the negotiation request at least carrying identification information about a to-be-negotiated frequency band and radio frequency parameter information about the to-be-negotiated frequency band,
the negotiation request is carried by a carrier, and
the waveform of the carrier signal is used for representing the identification information about the to-be-negotiated frequency band and the radio frequency parameter information about the to-be-negotiated frequency band; and
in the step of adjusting the radio frequency parameters of the to-be-negotiated frequency band according to the content carried in the negotiation request,
the multi-frequency tag learns the identification information about the to-be-negotiated frequency band and the radio frequency parameter information about the to-be-negotiated frequency band by analyzing the waveform of the carrier signal.

The above method can further have the following features:
the multi-frequency tag is in a dormant state when not working; and when the adjustment for the radio frequency parameters is completed, the multi-frequency tag enters a working state.

The present invention also provides a system for dynamically adjusting radio frequency parameters of a multi-frequency tag, comprising: a multi-frequency tag and an interaction object;
the interaction object is configured to send a negotiation request over a predetermined frequency band, and the negotiation request at least carries identification information about a to-be-negotiated frequency band and radio frequency parameter information about the to-be-negotiated frequency band; and
the multi-frequency tag is configured to receive the negotiation request over the predetermined frequency band and adjust the radio frequency parameters of the to-be-negotiated frequency band according to the content carried in the negotiation request.

The above system can further have the following feature:
the interaction object is used for carrying the negotiation request by means of a carrier signal sent out.

The above system can further have the following features:
the multi-frequency tag comprises: a carrier detection module, a main control module and N communication modules, wherein N is an integer greater than or equal to 2 and each of the communication modules works over a different frequency band;
the carrier detection module is configured to send to the main control module a carrier signal received over the predetermined frequency band; and
the main control module is configured to adjust the radio frequency parameters of a communication module whose working frequency band is the to-be-negotiated frequency band according to the content carried in the carrier signal received from the carrier detection module.

The above system can further have the following feature:
the carrier detection module works over the same frequency band with one of the N communication modules.

The above system can further have the following features:
the waveform of the carrier signal being used for representing the identification information about the to-be-negotiated frequency band and the radio frequency parameter information about the to-be-negotiated frequency band;
the main control module is configured to learn the identification information about the to-be-negotiated frequency band and radio frequency parameter information about the to-be-negotiated frequency band by analyzing the waveform of the carrier signal, and adjusting the radio frequency parameters of a communication module of a corresponding frequency band according to the above identification information and radio frequency parameter information.

The above system can further have the following features:
the multi-frequency tag is in a dormant state when not working; and when the adjustment for the radio frequency parameters is completed, the multi-frequency tag enters a working state.

The present invention also provides a multi-frequency tag for dynamically adjusting radio frequency parameters, comprising: a carrier detection module, a main control module and N communication modules, wherein N is an integer greater than or equal to 2 and each of the communication modules works over a different frequency band;
the carrier detection module is configured to send to the main control module a carrier signal received from an interaction object over a predetermined frequency band, wherein the carrier signal carries the identification information about the to-be-negotiated frequency band and radio frequency parameter information about the to-be-negotiated frequency band; and
the main control module is configured to adjust the radio frequency parameters of a communication module whose working frequency band is the to-be-negotiated frequency band according to the information carried in the carrier signal received from the carrier detection module.

The above multi-frequency tag can further have the following feature:
the carrier detection module works over the same frequency band with one of the N communication modules.

The above multi-frequency tag can further have the following features:
the waveform of the carrier signal is used for representing the identification information about the to-be-negotiated frequency band and the radio frequency parameter information about the to-be-negotiated frequency band; and
the main control module is configured to learn the identification information about the to-be-negotiated frequency band and radio frequency parameter information about the to-be-negotiated frequency band by analyzing the waveform of the carrier signal, and adjusting the radio frequency parameters of a communication module whose working frequency band is the to-be-negotiated frequency band according to the above identification information and radio frequency parameter information.

As to an active tag which has rather high requirements on power consumption, by way of the present invention, the radio frequency state can be adjusted according to the application scenario, and the multi-frequency tag enters the service working state only in occasions where it needs to work, and when the work is completed, it will return back to the ultra-low power consumption state, thereby achieving the function of reducing power consumption as far as possible. Moreover, by way of the present invention, the multi-frequency tag can be adapted to different interaction objects and meet the requirements of different service functions.

### Brief Description of Drawings

Fig. 1 is a structural schematic diagram of a multi-frequency tag in a system for dynamically adjusting radio frequency parameters of a multi-frequency tag in the embodiments of the present invention;
Fig. 2 is a structural schematic diagram of another multi-frequency tag in a system for dynamically adjusting radio frequency parameters of a multi-frequency tag in the embodiments of the present invention;
Fig. 3 is a structural schematic diagram of a system in which a plurality of interaction objects interact with one multi-frequency tag so as to achieve the dynamic adjustment of radio frequency parameters of the multi-frequency tag; and
Fig. 4 is a flowchart of a method for dynamically adjusting radio frequency parameters of a multi-frequency tag in the embodiments of the present invention.

### Preferred Embodiments of the Present Invention

Hereinafter, the technical solution of the present invention will be described in detail in conjunction with the accompanying drawings and embodiments.

The method of the present invention is applied between a multi-frequency tag and an interaction object, and its basic concept is: the interaction object sending a negotiation request over a predetermined frequency band, with the request at least carrying identification information about a to-be-negotiated frequency band and radio frequency parameter information about the to-be-negotiated frequency band; and the multi-frequency tag receiving the negotiation request over the predetermined frequency band and adjusting the radio frequency parameters of the corresponding frequency band according to the content carried in the negotiation request which at least comprises the above identification information and radio frequency parameter information.

It needs to note that the above predetermined frequency band is a frequency band agreed by the interaction object and multi-frequency tag before negotiating the parameters.

In this case, the negotiation request can be carried by a carrier signal, and the waveform of the carrier signal can be used for representing the identification information about the to-be-negotiated frequency band and the radio frequency parameter information about the to-be-negotiated frequency band, and the multi-frequency tag learns the identification information about the to-be-negotiated frequency band and the radio frequency parameter information about the to-be-negotiated frequency band by analyzing the waveform of the carrier signal so as to adjust the radio frequency parameters according to the above information. The multi-frequency tag is in a dormant state when not working, i.e. at this moment, the communication module of each frequency band does not work and not generate power consumption.

The basic concept of the system of the present invention is: the system includes a multi-frequency tag and an interaction object;
the interaction object is configured to send a negotiation request over a predetermined frequency band, and the negotiation request at least carries identification information about a to-be-negotiated frequency band and radio frequency parameter information about the to-be-negotiated frequency band; and
the multi-frequency tag is configured to adjust the radio frequency parameters of a corresponding frequency band according to the content carried in the negotiation request after receiving the negotiation request from the interaction object over the predetermined frequency band.

In this case, the negotiation request can be carried by sending a carrier, and the waveform of the carrier signal can be used for representing the identification information about the to-be-negotiated frequency band and the radio frequency parameter information about the to-be-negotiated frequency band.

Furthermore, the multi-frequency tag includes a carrier detection module, a main control module and N communication modules, wherein N is an integer greater than or equal to 2 and each of the communication modules works over a different frequency band, and the carrier detection module can but not limited to work over the same frequency band with one of the above communication modules.

The carrier detection module is in a passive receiving state, i.e. it only works in the situation where there is a carrier, therefore, power consumption can be reduced as far as possible. The carrier detection module can send to the main control module the carrier received over the predetermined frequency band.

The main control module can adjust the radio frequency parameters of the communication module of a corresponding frequency band according to the content carried in the carrier received from the carrier detection module. That is to say, the main control module can learn the identification information about the to-be-negotiated frequency band and radio frequency parameter information about the to-be-negotiated frequency band by analyzing the waveform of the carrier and then adjust the radio frequency parameters of the communication module which works over the to-be-negotiated frequency band according to the above information.

Hereinafter, the application examples of the present invention will be further described.

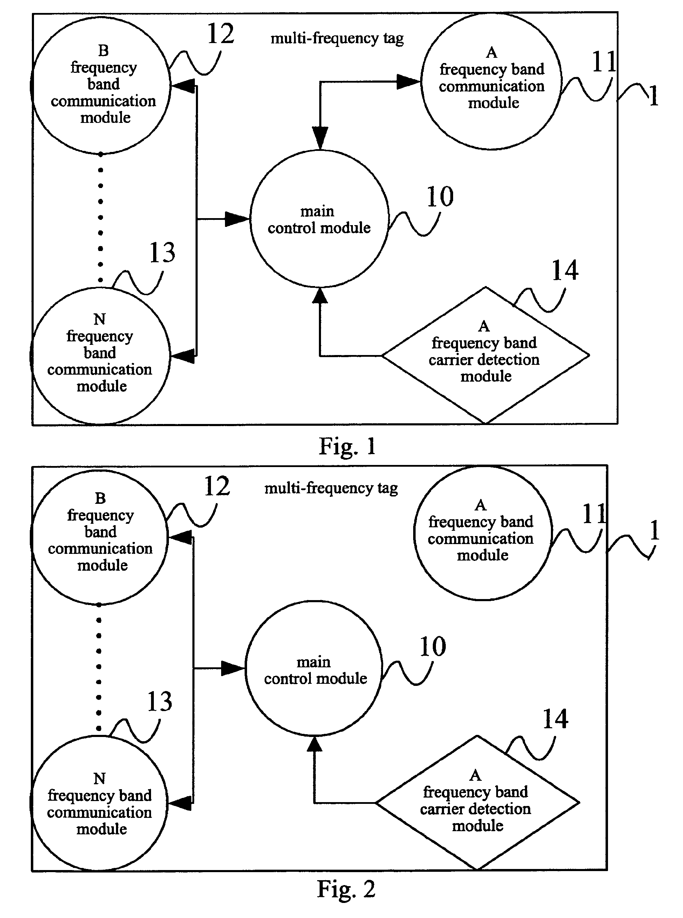

As shown in Fig. 1, a multi-frequency tag 1 having radio frequency parameter dynamic adjustment function consists of a main control module 10, an A frequency band communication module 11, a B frequency band communication module 12, ... an N frequency band communication module 13 for service communication, and an A frequency band carrier detection module 14 for radio frequency parameter negotiation. In this case, the A, B, ... N frequency band communication modules for service communication and the A frequency band carrier detection module 14 are connected to the main control module 10 respectively.

In addition, as shown in Fig. 2, the A frequency band communication module 11 can also be used as an independent function unit and has no interaction with the main control module 10, i.e. the A frequency band carrier detection module 14 is only used for the radio frequency parameter negotiation of other working frequency bands.

For the sake of simplicity, the method of the present invention will be described by taking dual frequency as an example. However, the present solution is not limited to dual frequency tag.

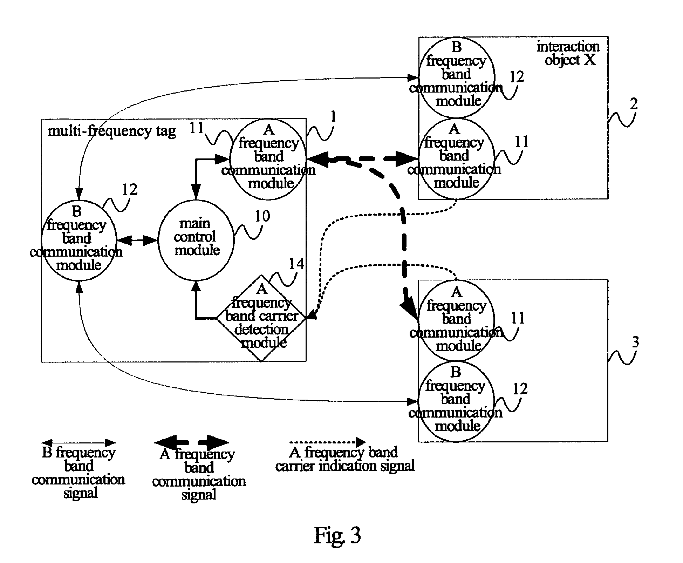

As shown in Fig. 3, a dual frequency tag uses two frequency bands A and B for communication, wherein the A frequency band uses 13.56 M high frequency signals, and the B frequency uses 433 M signals. The B frequency band relates to various different application scenarios, and the radio frequency parameters need to be adjusted according to different interaction objects; and the radio frequency parameters of the A frequency band keep fixed.

In addition to the A frequency band communication module 11, B frequency band communication module 12 and main control module 10, this dual frequency tag further includes an A frequency band carrier detection module 14 which can be used to detect the carrier signal of the interaction object X2 over A frequency band and send this carrier signal into the main control module 10.

When the interaction object X2 is prepared to communicate with the dual frequency tag 1 over B frequency band, a carrier carrying the identification information about B frequency band and radio frequency parameter information about B frequency band is sent over the A frequency band. The A frequency band carrier detection module 14 sends the above carrier to the main control module 10 after detecting the above carrier, and the main control module 10 completes the adjustment of the radio frequency parameters required for the interaction object X2 according to the information carried in the carrier. Likewise, the interaction object Y3 can also use the same way to adjust the radio frequency parameters of the dual frequency tag so as to adapt to the requirements of the interaction object Y3.

In addition, after the interaction is completed, the dual frequency tag returns back to the default radio frequency state so as to meet specific requirements.

As to a multi-frequency tag, the difference from the above dual frequency tag only lies in the utilization amount of the service frequency band, and other mechanism has no essential difference.

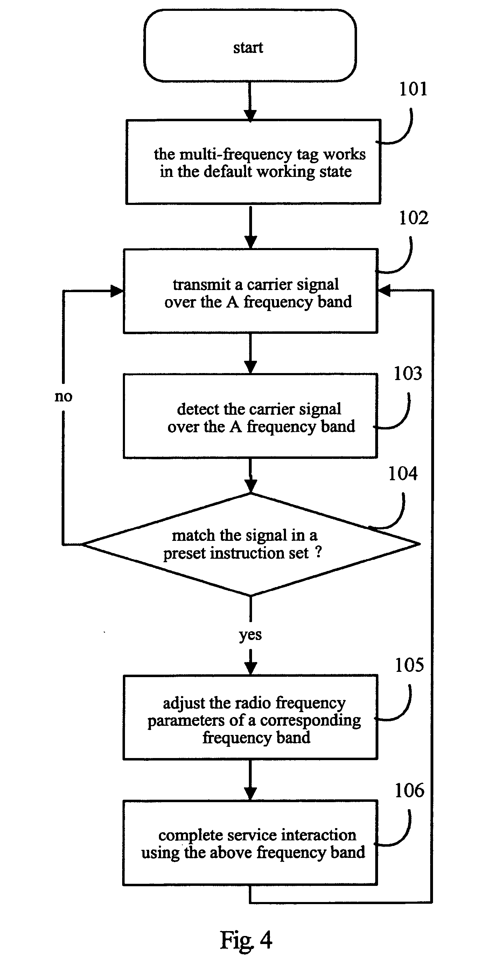

As shown in Fig. 4, the procedure of a multi-frequency tag with radio frequency parameter dynamic adjustment function adjusting the radio frequency parameters is as follows:
Step 101: the multi-frequency tag works in the default working state and waits for the A frequency band carrier detection module in the passive receiving state to return an indication;
Step 102: when the multi-frequency tag is within the effective range of the interaction object, the interaction object transmits a carrier signal with a specific waveform over the A frequency band and indicates the multi-frequency tag to change the radio frequency parameters of a corresponding frequency band.
Step 103: the A frequency band carrier detection module sends the detected carrier signal to the main control module;
Step 104:the main control module analyzes the above carrier signal and judges whether this signal is identical to the signal in a preset instruction set, and if not, then returns back to the default working state; otherwise, performs the next step;
Step 105: after the main control module has adjusted the radio frequency parameters of the corresponding frequency band, the multi-frequency tag enters the service state which the interaction object expects; and
Step 106: after the multi-frequency tag completes the service function with the interaction object, based on the application requirements, it enters the default working state automatically or according to the indication of the interaction object (this indication can also be carried by the above carrier).

Of course, the present invention can have several other embodiments, and those skilled in the art can make various corresponding modifications and variations according to the present invention without departing from the spirit and essence of the present invention, and these corresponding modifications and variations shall belong to the scope of protection of the appended claims of the present invention.

### Industrial Applicability

The method, system and multi-frequency tag for dynamically adjusting radio frequency parameters provided by the present invention can dynamically modify the radio frequency parameters so as to adapt to different interaction objects, and the multi-frequency tag can adjust the radio frequency state according to different application scenarios, i.e. the multi-frequency tag enters the service working state only in occasions where it needs to work, and when the work is completed, it returns back to the ultra-low power consumption state, thereby reducing the power consumption as far as possible.

## Claims

1. A method for dynamically adjusting radio frequency parameters of a multi-frequency tag, applied between a multi-frequency tag and an interaction object, the method comprising:
the interaction object sending a negotiation request over a predetermined frequency band, which at least carries identification information about a to-be-negotiated frequency band and radio frequency parameter information about the to-be-negotiated frequency band; and
the multi-frequency tag receiving the negotiation request over the predetermined frequency band and adjusting the radio frequency parameters of the to-be-negotiated frequency band according to content carried in the negotiation request.

2. The method as claimed in claim 1, wherein in the step of the interaction object sending a negotiation request over a predetermined frequency band which at least carries identification information about a to-be-negotiated frequency band and radio frequency parameter information about the to-be-negotiated frequency band,
the negotiation request is carried by a carrier signal; and
a waveform of the carrier signal is used for representing the identification information about the to-be-negotiated frequency band and the radio frequency parameter information about the to-be-negotiated frequency band;
in the step of adjusting the radio frequency parameters of the to-be-negotiated frequency band according to the content carried in the negotiation request,
the multi-frequency tag learns the identification information about the to-be-negotiated frequency band and the radio frequency parameter information about the to-be-negotiated frequency band by analyzing the waveform of the carrier signal.

3. The method as claimed in claim 1, wherein
the multi-frequency tag is in a dormant state when not working; and when the adjustment for the radio frequency parameters is completed, the multi-frequency tag enters a working state.

4. A system for dynamically adjusting radio frequency parameters of a multi-frequency tag, the system comprising: a multi-frequency tag and an interaction object; wherein
the interaction object is configured to send a negotiation request over a predetermined frequency band, which at least carries identification information about a to-be-negotiated frequency band and radio frequency parameter information about the to-be-negotiated frequency band; and
the multi-frequency tag is configured to receive the negotiation request over the predetermined frequency band and adjust the radio frequency parameters of the to-be-negotiated frequency band according to content carried in the negotiation request.

5. The system as claimed in claim 4, wherein
the interaction object is configured to carry the negotiation request by means of a carrier signal sent out.

6. The system as claimed in claim 5, wherein
the multi-frequency tag comprises: a carrier detection module, a main control module and N communication modules, wherein N is an integer greater than or equal to 2 and each of the communication modules works over a different frequency band;
the carrier detection module is configured to send to the main control module a carrier signal received over the predetermined frequency band;
the main control module is configured to adjust the radio frequency parameters of a communication module whose working frequency band is the to-be-negotiated frequency band according to content carried in the carrier signal received from the carrier detection module.

7. The system as claimed in claim 6, wherein
the carrier detection module works over a same frequency band with one of the N communication modules.

8. The system as claimed in claim 5 or 6, wherein
a waveform of the carrier signal is used for representing the identification information about the to-be-negotiated frequency band and the radio frequency parameter information about the to-be-negotiated frequency band;
the main control module is configured to learn the identification information about the to-be-negotiated frequency band and the radio frequency parameter information about the to-be-negotiated frequency band by analyzing the waveform of the carrier signal, and adjust the radio frequency parameters of a communication module of a corresponding frequency band according to the identification information and radio frequency parameter information.

9. The system as claimed in claim 4, wherein
the multi-frequency tag is in a dormant state when not working; and when the adjustment for the radio frequency parameters is completed, the multi-frequency tag enters a working state.

10. A multi-frequency tag for dynamically adjusting radio frequency parameters, comprising: a carrier detection module, a main control module and N communication modules, wherein N is an integer greater than or equal to 2 and each of the communication modules works over a different frequency band;
the carrier detection module is configured to send to the main control module a carrier signal received from an interaction object over a predetermined frequency band, which carries identification information about a to-be-negotiated frequency band and radio frequency parameter information about the to-be-negotiated frequency band; and
the main control module is configured to adjust the radio frequency parameters of the communication module whose working frequency band is the to-be-negotiated frequency band according to content carried in the carrier signal received from the carrier detection module.

11. The multi-frequency tag as claimed in claim 10, wherein
the carrier detection module works over a same frequency band with one of the N communication modules.

12. The multi-frequency tag as claimed in claim 10, wherein
a waveform of the carrier signal is used for representing the identification information about the to-be-negotiated frequency band and the radio frequency parameter information about the to-be-negotiated frequency band; and
the main control module is configured to learn the identification information about the to-be-negotiated frequency band and the radio frequency parameter information about the to-be-negotiated frequency band by analyzing the waveform of the carrier signal, and adjust the radio frequency parameters of a communication module whose working frequency band is the to-be-negotiated frequency band according to the identification information and the radio frequency parameter information.
